# EUROPEAN PATENT APPLICATION

(11) **EP 3 453 564 A1**
(43) Date of publication of application: **13.03.2019**
(21) Application number: 17190658.9
(22) Date of filing: 12.09.2017
(51) Int. Cl.: B60N 2/28

(54) **CAR SEAT FOR CHILDREN PROVIDED WITH AN ENERGY ABSORBING SYSTEM**

(71) Applicant: Zhejiang Ganen Technology Co., Ltd, Huangyan, Taizhou, Zhejiang (CN)
(72) Inventor: ROSSI, Federico, 10121 Turin (IT); SPEZIANI, Daniele, 10121 Turin (IT); ZHENG, HUI, 10121 Turin (IT); PAN, An, 10121 Turin (IT)
(74) Representative: Bruni, Giovanni

(57) **Abstract**

Car seat for children (100) having a body (9) and a base (10) with an ISOfix coupling system for anchoring said base (10) to the seat of the car, said body (9) being movable respect to said base (10), and means for energy absorbing (7) positioned between the body (9) and the base (10) and configured to be deformed during a relative motion between body (9) and base (10). Said seat (100) is provided with means for inhibiting (13) configured to block the relative movement of the body (9) with respect to the base (10).

## Description

The present invention relates to a car seat for children provided with an innovative energy absorbing system in the event of a collision. Specifically, the system, object of the present invention, is contained within the support base to which the car seat is connected. This energy absorbing system is configured so that the seat can be used both in the driving direction and in the opposite direction, when the baby is still very small.

As well known, the technical sector is that of child safety systems that are mounted inside the cars. Article 172 of the Italian Traffic Code obliges the use of a child seat approved and adapted to the weight of children up to 150 cm in height according to standard R129 stage 1. It also obliges that child safety systems to be used in cars are equipped with an internationally-standardized "ISOfix" system for correctly installing a car seat without using seat belts. The ISOfix name comes from ISO (International Standardization Organization) and FIX (Fixation = fixing). To secure the seat directly to the car frame, the ISOfix system uses two connectors located in the base of the child seat and a third anchor point, called anti-rotation device, designed to prevent any rotating movement, which can be: a strap or a supporting leg. The ISOfix connectors on the base of the child seat should be attached to the ISOfix couplings integrated into the car and located between the seatback and the seat base: thus a rigid connection between the seat and the car frame is created. The above-mentioned Italian Traffic Code also obliges children up to 15 months and up to 71cm to be accommodated on a child seat that must be installed compulsorily in the opposite direction to driving. In the event of a collision, in fact, the child's skeletal and muscular structure still underdeveloped may be more affected by slamming against the seat belt rather than against the seat back of the child seat.

Car seat for children provided with an energy absorbing system are known in the state of the art. For example, Chinese patent application No. CN103661029A describes a car seat that can slide relative to the base and a plurality of energy absorption blocks arranged between the seat and the base. When the child seat moves from the base, the energy absorbing blocks are squeezed and deformed to absorb the energy released from the seat at the time of the crash. Another example is the Chinese patent application N.CN104002704 which describes an absorption system positioned in the base support leg of a child car seat. The energy generated by a collision causes a squeeze of a telescopic cylinder placed inside the leg and the energy absorbed by the seat movement is absorbed. Object of the present invention is to increase the safety of the child when traveling by car, especially to protect the child in the event of a collision, regardless of the orientation of the child seat.

For this purpose, the child car seat of the present invention is provided with an energy absorption system. The child car seat is configured so that it can be used with orientation both in the driving direction and when the baby is still very small, in the opposite direction.

Currently, while car seats for children provided with an energy absorbing system are known in the state of the art, car seats which, although equipped with such systems, can be oriented either in the driving direction or in the opposite direction are unknown.

The seat of the present invention is provided with an energy absorbing system and further comprises an inhibitor which enables or disables its operation depending on the direction in which the child seat is mounted.

The various embodiments of the invention will now be described, by way of example, with reference to the accompanying drawings in which:
Figure 1 is a cross-sectional view of the car seat according to the driving direction of the car, according to a form of embodiment of the present invention;
Figure 2 is a cross-sectional view of the car seat oriented in the opposite direction to the driving direction of the car, according to a form of embodiment of the present invention;
Figure 3 is an axonometric view of the ISOfix coupling system contained within the base of the child seat of Fig. 1, according to an embodiment of the present invention;
Figure 4 is an axonometric view of the ISOfix coupling system with the energy absorber at rest or undeformed configuration, according to an embodiment of the present invention;
Figure 5 is an axonometric view of the ISOfix coupling system with the energy absorber in a work or deformed configuration after a collision, according to an embodiment of the present invention;
Figure 6 is an axonometric view of the ISOfix coupling system with the inhibitor in a non-operative position, when the child seat is oriented in the driving direction, as in Fig. 1;
Figure 7 is an axonometric view of the ISOfix coupling system with the inhibitor in an operative position, when the seat is oriented in the opposite direction to the driving direction, as in Fig. 2;
Figure 8 is a detail of the energy absorber according to an embodiment of the present invention.

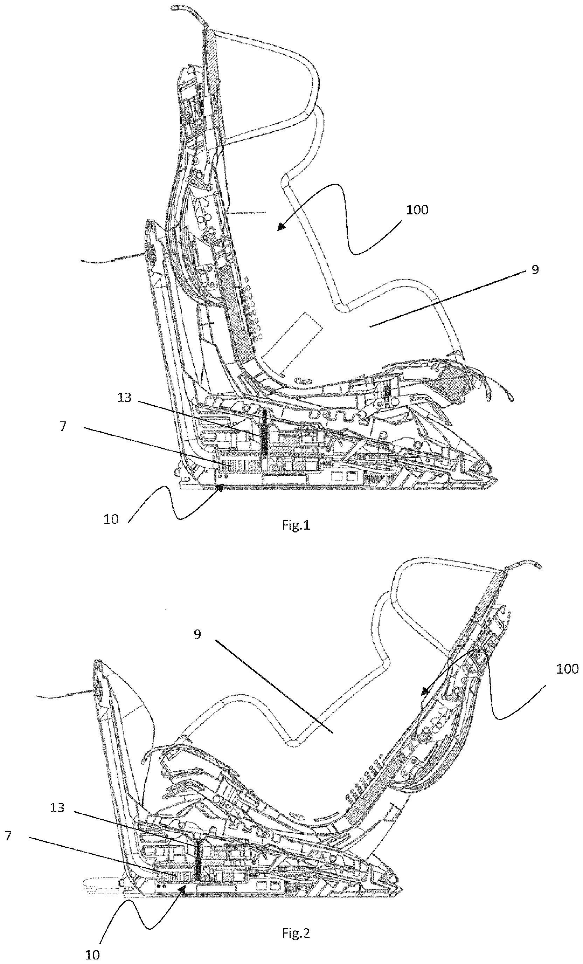

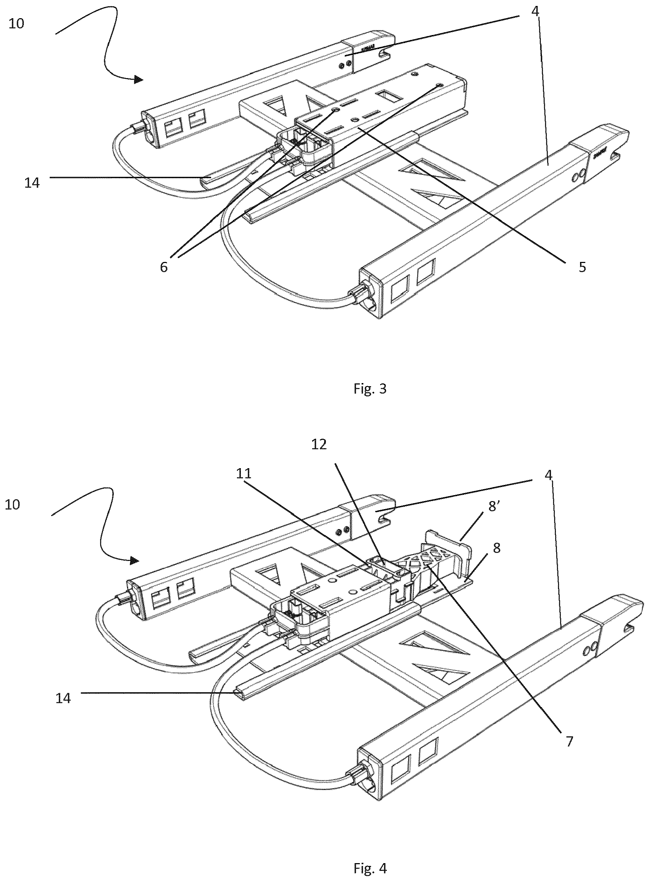

The car seat for children 100 of the present invention, as shown in FIGS. 1 and 2, comprises a body 9 and a base 10 for connecting the seat 100 to the car seat. Said base 10 comprises an ISOfix coupling system of the known type comprising two ISOfix connectors 4 and a pair of sliding guides 14 (Figures 3-7). The ISOfix coupling system and its components are integral with the base 10 and consequently the base 10 and the ISOfix coupling system are integral to the car. Centrally between the two ISOfix connectors 4 there is a casing 5 which connects the body 9 to the base 10 of the seat 100 by means of bolts 6, such as four as in Figure 3. Casing 5 and body 9 of the seat 100 are mutually integral and are able to move together. In particular, the casing 5 will move within the pair of sliding guides 14. Such a situation occurs, for example, in the event of a collision or a sudden braking of the vehicle.

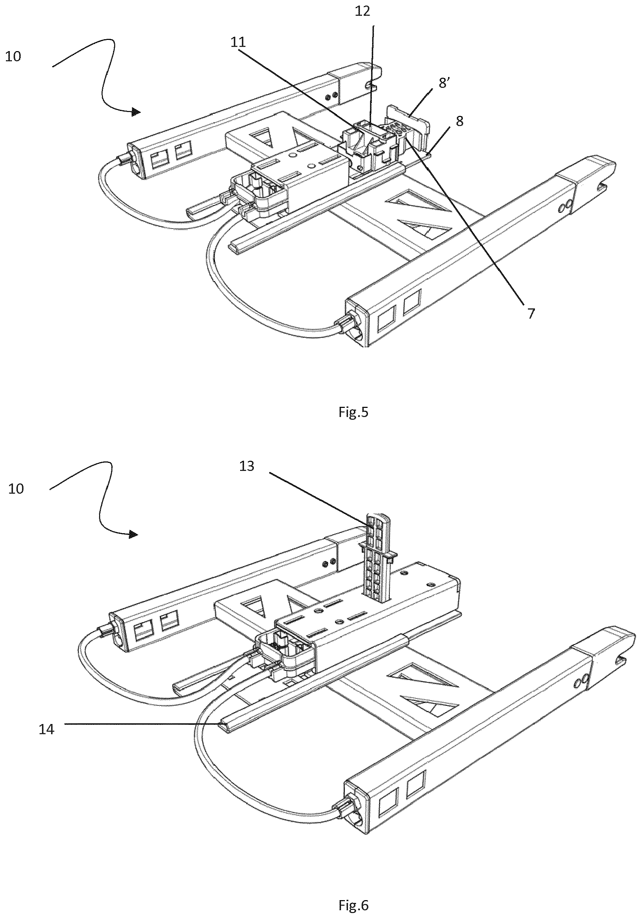

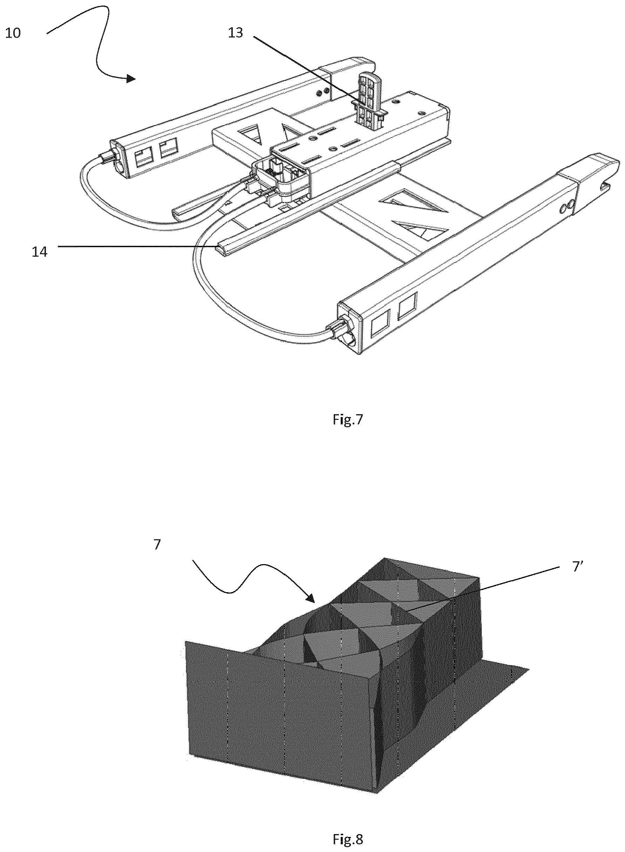

As shown in Figures 4 and 5, under the casing 5 there is a plate 8, to which at the rear end (i.e. the one facing the hooks of the ISOfix connectors) is secured a means for energy absorbing 7. This means for energy absorbing or energy absorber 7 is housed between a wall 8' integral and almost orthogonal to the plate 8 and a frame 11 contained within the casing 5 and comprising part of the actuation mechanisms of the ISOfix coupling system. The frame 11 is fixed and has a slot 12 on a proximal portion of the energy absorber 7, in which a means for inhibiting or inhibitor 13 is positioned (Figures 6 and 7).

The energy absorber 7 is normally in a rest or undeformed configuration, as shown in Figure 4, while being in a working or deformed configuration as a result of a collision, as shown in Figure 5.

The deformation of the energy absorber 7 is caused by the relative motion between the wall 8', integral with the casing 5 and then with the body 9 of the seat 100, and the frame 11. When full inserted inside a slot 12, the inhibitor 13 blocks the relative motion between the wall 8' and the frame 11, which therefore cannot deform the energy absorber 7.

According to an embodiment of the present invention, the car seat for children 100 is mounted, as shown in Figure 1, in the driving direction. In this configuration, the energy absorber 7 should be able to operate to damp the collision stresses. Therefore, the inhibitor 13 will be in raised position, as shown in Figure 6. In this position, the inhibitor 13 does not exercise its function. In the event of a collision, the inertia force acting according to the driving direction on the seat 100 and then on the casing 5 and on the wall 8' will cause the motion of the wall 8' towards the frame 11. Consequently, when the wall 8' moves towards the frame 11, the energy absorber 7 will act by attenuating the stresses.

In an alternative embodiment of the present invention, the car seat or children 100 is mounted, as shown in Figure 2, in the opposite direction to the driving direction. In this case, when a collision or a sudden deceleration occurs, it is important that the seat 100 mounted in the opposite direction to the driving one, does not make any movement and therefore does not act on the energy absorber 7. In this configuration the inhibitor 13 will be fully inserted inside the slot 12 as shown in Figure 7. In this configuration, the inhibitor 13 performs its function. Consequently, the plate 8 and the wall 8' cannot move towards the frame 11 and therefore the energy absorber 7 will not be compressed.

Figure 8 shows an example of energy absorber 7 associated with the seat of the present invention. The energy absorber 7 is configured so that the mass distribution guarantees better stability in the transverse direction. This feature is extremely important when the energy absorber is deformed due to forces that may not be perpendicular to the symmetry axis of the system.

The energy absorber 7 is substantially "Y" shaped and has been defined by a plurality of crash tests in which the optimum thickness of the internal ribs 7' between 2.5 and 3.5 mm has been analyzed and evaluated in different combinations.

In addition to the embodiments of the invention, as previously described, it is to be understood that there are numerous further variants. It must also be understood that said embodiments are only exemplary and limit neither the subject of the invention nor its applications, nor its possible configurations. On the contrary, although the above description makes it possible to the skilled technician to implement the present invention at least according to one of its exemplary configuration, it should be understood that numerous variations are conceivable of the components described, without for this reason escaping from the scope of the invention, as defined in the appended claims, which are literally interpreted and/or according to their legal equivalents.

## Claims

1. Car seat for children (100) comprising a body (9) and a base (10) with an ISOfix coupling system for anchoring said base (10) to the seat of the car, said body (9) being movable respect to said base (10), and means for energy absorbing (7) positioned between the body (9) and the base (10) and configured to be deformed during a relative motion between body (9) and base (10), said seat (100) being **characterized by** means for inhibiting (13) configured to block the relative movement of the body (9) with respect to the base (10).

2. Seat (100) according to claim 1, wherein the ISOfix coupling system comprises two ISOfix connectors (4) and a pair of sliding guides (14).

3. Seat (100) according to claim 2, wherein a casing (5) integral to the body (9) is provided between the two ISOfix connectors (4), said casing (5) being configured to mechanically connect the body (9) to the base (10) of the seat (100) by means of bolts (6).

4. Seat (100) according to one of the claims from 1 to 3, wherein said means for energy absorbing (7) is fixed to a plate (8) and housed between a wall (8 '), which is integral with the casing (5) and substantially orthogonal to said plate (8), and a frame (11) integral with the base (10).

5. Seat (100) according to claim 4, wherein said means for energy absorbing (7) is configured to be deformed by the relative motion between the wall (8') and the frame (11).

6. Seat (100) according to one of the claims from 1 to 5, wherein said means for inhibiting (13) is positioned in a slot (12) which is located in a portion of the frame (11), said portion being proximal to the means for energy absorbing (7).

7. Seat (100) according to claim 6 wherein said means for inhibiting (13) is fully inserted inside the slot (12) of the frame (11) so that the plate (8) and the wall (8') cannot move towards the frame (11) and therefore the means for energy absorbing (7) will not be compressed.

8. Seat (100) according to one of the claims from 1 to 7, wherein said means for energy absorbing (7) is substantially "Y" shaped and provided with internal ribs (7') having a thickness ranging between 2.5 mm and 3.5 mm.
